# EUROPEAN PATENT APPLICATION

(11) **EP 2 460 578 A1**
(43) Date of publication of application: **06.06.2012**
(21) Application number: 10193367.9
(22) Date of filing: 01.12.2010
(51) Int. Cl.: B01D 53/00, B01D 53/26, F25J 3/00, F28D 17/00, F28D 20/00

(54) **Sub-zero gas cooling**

(71) Applicant: Alstom Technology Ltd, 5400 Baden (CH)
(72) Inventor: Hees, Wolfgang G., 211 37, Malmö (SE); Augustsson, Ola, 352 35, VÄXJÖ (SE); Amann, Jean-Marc G., 352 59, VÄXJÖ (SE)
(74) Representative: Presland, Torbjörn

(57) **Abstract**

A method of cooling and drying a moist gas stream, the cooling being to a temperature below about 0 °C. The gas stream is passed through a regenerative heat exchanger, whereby the temperature of the gas stream is decreased and a portion of the moisture present in the gas stream is transferred to ice that is deposited in the regenerative heat exchanger. A system (1) for removal of CO₂ from a moist flue gas (2), the system comprising a CO₂ separation vessel (3) adapted for operation at a temperature below about 0 °C, and two or more regenerative heat exchangers (4, 5, 6). Use of a regenerative heat exchanger for cooling of a gas stream to a temperature below about 0 °C.

## Description

### Technical field

The present application relates to a method of cooling and drying a moist gas stream, the cooling being to a temperature below about 0 °C, to a system for removal of CO₂ from a moist flue gas, the system comprising a CO₂ separation vessel adapted for operation at a temperature below about 0 °C, and to the use of a heat exchanger for cooling of a gas stream to a temperature below about 0 °C.

### Background art

Heat exchange between gases at low temperatures commonly takes place in a recuperative heat exchanger, such as an aluminium plate-fin heat exchanger. An example of an industrially applied process involving the cooling of a gas to a temperature below 0 °C is a process for the capture of carbon dioxide (CO₂) based on separation of liquid or solid CO₂ from a gas mixture. Carbon dioxide capture in known systems based on separation of liquid or solid CO₂ from a gas mixture, typically a flue gas, requires cooling of the gas mixture to temperatures as low as -10 to -150 °C. Initial cooling of a flue gas above 0 °C has been performed by direct contact of the flue gas with water. Cooling of a moist gas to a temperature below 0 °C results in the formation of ice.

US 7,073,348 pertains to a method and system for extracting and storing carbon dioxide from fumes derived from the combustion of hydrocarbons in an apparatus designed in particular for the production of mechanical energy. The system comprises: exchangers and a dehydrator, for extracting water from the fumes in liquid form at a pressure more or less equal to atmospheric pressure; an integrated cascaded refrigerating apparatus, for cooling the fumes at a pressure more or less equal to atmospheric pressure and at a temperature such that the carbon dioxide passes directly from the vapor state to the solid state, via an anti-sublimation process; a fixed and/or removable reservoir and suction means, in particular a pneumatic pump, for storing the carbon dioxide in liquid form after defrosting.

### Summary of the invention

An object of the present invention is to improve the cooling of gases or gas mixtures to temperatures below 0 °C, in particular as concerns the heat efficiency of the heat exchanger involved.

Another object of the present invention is to improve the cooling of moist gases or gas mixtures to temperatures below 0 °C, in order to reduce undesirable influence of ice formation.

Another object of the present invention is to allow for simpler and cheaper design of systems and processes for the cooling and/or drying of gases or gas mixtures at temperatures below 0 °C.

In the present context, the word "gas", such as in the term "gas stream", refers to a single gas or a mixture of gases. A "flue gas", sometimes expressively denoted a "CO₂ comprising flue gas", refers to a gas mixture comprising CO₂, typically a flue gas resulting from combustion of organic material such as renewable or non-renewable fuels. Should a gas stream to be treated according to what is disclosed herein comprise chemical species or particles not suitable for such treatment, such species or particles may initially be removed by separation technologies known to a skilled person.

In the present context, the word "ice" refers to water ice, i.e. the solid form of water. Water ice is not to be confused with CO₂ ice that may form as a result of anti-sublimation of gaseous CO₂. As has become common in the technical field of CO₂ capture, the term "anti-sublimation" herein refers to a direct gas/solid phase change that occurs when the temperature of the gas in question is below that of its triple point.

In the present context, the term "regenerative heat exchanger" refers to a heat exchanger in which hot and cold fluids alternatively occupy the same space containing a packing material that works either as a sink or a source for heat flow. Accordingly, the function of the packing material is to store heat in one part of a process cycle and to release this heat in a second part of the cycle. In the present context, the term "recuperative heat exchanger" refers to a heat exchanger in which hot and cold fluids exchange heat on either side of a dividing wall.

The above-mentioned objects as well as further objects, which will become apparent to a skilled person after studying description below, are achieved, in a first aspect, by a method of cooling and drying a moist first gas stream, the cooling being to a first temperature below about 0 °C, said method comprising the following steps:
a) passing a second gas stream, having a second temperature being lower than the first temperature, through a regenerative heat exchanger, whereby the temperature of the regenerative heat exchanger is decreased to a third temperature being lower than the first temperature; and
b) passing the first gas stream, having a fourth temperature being higher than the first temperature, through the regenerative heat exchanger, whereby the temperature of the first gas stream is decreased to the first temperature and a portion of the moisture present in the first gas stream is transferred to ice that is deposited in the regenerative heat exchanger.

The ice formed when a moist gas stream is cooled to a temperature below 0 °C can better be accommodated in a regenerative heat exchanger, and can at least partly be removed during its regeneration, than in a recuperative heat exchanger typically having very thin channels that may be blocked by the ice formed. The accommodation of ice in the regenerative heat exchanger provides for drying, or dehumidification, of the moist gas stream.

The method may be applied in a process for the capture of CO₂. The first gas stream may thus be a CO₂ comprising flue gas stream, preferably a flue gas stream comprising about 3 to 90 vol% CO₂. In order to achieve capture of CO₂ from the flue gas stream, the method may further comprise the following step: c) decreasing the temperature of the gas stream leaving the regenerative heat exchanger of step b) so that a phase change of CO₂ in the gas stream occurs, and separating such phase changed CO₂ from the gas stream.

The method may further comprise the following step: d) passing the gas stream resulting from step b) or step c), if present, to step a) as the second gas stream. This further step provides an efficient means for decreasing the temperature of the regenerative heat exchanger during step a).

The regenerative heat exchanger may have a packing material comprising concrete. It has been found that concrete as a packing material may withstand the constant thermal cycling, the water deposition and the mechanical load without extended degradation over the lifetime of the regenerative heat exchanger. Using concrete as a packing material, the gas passages through the packing material can be made big enough to allow large ice depositions. Concrete is furthermore relatively cheap. As compared to aluminium, which is commonly used for the plates separating the streams in recuperative heat exchangers, concrete will be less negatively affected by heavy metals, such as mercury, likely to be present in flue gases.

Above is referred to a further step c) involving a phase change of CO₂ in the gas stream, and separation of such phase changed CO₂ from the gas stream. Such phase change may be anti-sublimation. Alternatively, such phase change may be condensation.

As an example of suitable operating temperatures, the first temperature may be in the range from about -10 to about -150 °C, the second temperature may be in the range from about -10 to about -150 °C, and the fourth temperature may be in the range from about 0 to about -60 °C. Preferably the first temperature may be in the range from about -80 to about -110 °C, the second temperature may be in the range from about -100 to about -140 °C, and the fourth temperature may be in the range from about -35 to about -55 °C. These operating temperatures are applicable, e.g., when a further step c) involving anti-sublimation of CO₂ is present in the method.

As an alternative example of suitable operating temperatures, the first temperature may be in the range from about -10 to about -60 °C, the second temperature may be in the range from about -10 to about -60 °C, and the fourth temperature may be in the range from about +30 to about -60 °C. These operating temperatures are applicable, e.g., when a further step c) involving condensation of CO₂ is present in the method.

As an example of suitable operating pressures, the first gas stream may have a pressure around atmospheric pressure, such as from about 0.9 to about 1.2 bar absolute. A pressure around atmospheric pressure is applicable, e.g., when a further step c) involving anti-sublimation of CO₂ is present in the method. As another example of suitable operating pressures, the first gas stream may have a pressure above atmospheric pressure, such as from about 20 to about 50 bar absolute, preferably from about 25 to about 40 bar absolute. A pressure above atmospheric pressure is applicable, e.g., if the first gas stream has been compressed before entering step b). Compression may typically occur when a further step c) involving condensation of CO₂ is present in the method, as is common for removal of CO₂ from flue gases originating from the so-called oxy-firing process.

The objects of the present invention are also achieved, in a second aspect, by a system for removal of CO₂ from a moist flue gas, the system comprising
a CO₂ separation vessel adapted for operation at a temperature below about 0 °C, and
two or more regenerative heat exchangers,
wherein,
each regenerative heat exchanger is switchable between
a first operation mode in which the respective regenerative heat exchanger is arranged to receive a CO₂ comprising flue gas from a flue gas treatment system and is further connected to an inlet of the CO₂ separation vessel, and a second operation mode in which the respective regenerative heat exchanger is connected to an outlet of the CO₂ separation vessel and is further arranged to provide a CO₂ reduced flue gas to a flue gas treatment system.

The first operation mode is intended for operation corresponding to above-mentioned step b). The second operation mode is intended for operation corresponding to above-mentioned step a).

The ice formed when a moist gas stream is cooled to a temperature below 0 °C can better be accommodated in a regenerative heat exchanger, and can at least partly be removed during its regeneration, than in a recuperative heat exchanger typically having very thin channels that may be blocked by the ice formed. The accommodation of ice in the regenerative heat exchanger provides for drying, or dehumidification, of the moist gas stream, which in turn provides improved conditions in the CO₂ separation vessel.

The system may comprise three or more regenerative heat exchangers. In a system with three or more regenerative heat exchangers, each regenerative heat exchanger may be switchable between the first operation mode, the second operation mode, and a third operation mode in which the respective regenerative heat exchanger is disconnected from the CO₂ separation vessel and from the flue gas treatment system. In the third operation mode the respective regenerative heat exchanger may be connected to a defrosting system. Defrosting may involve passing a gas, such as air or nitrogen, through the regenerative heat exchanger so as to sublimate and/or melt ice present therein. Vapour formed from sublimating ice is removed from the regenerative heat exchanger with the passing gas. Water formed from melting ice is drained from the regenerative heat exchanger.

The CO₂ separation vessel may be a CO₂ condensation vessel, as is common in systems for removal of CO₂ from flue gases originating from the so-called oxy-firing process. Alternatively, the CO₂ separation vessel may be a CO₂ frosting vessel, i.e. a vessel for anti-sublimation of CO₂ present in the flue gas.

Each regenerative heat exchanger may have a packing material comprising concrete. It has been found that concrete as a packing material may withstand the constant thermal cycling, the water deposition and the mechanical load without extended degradation over the lifetime of the regenerative heat exchanger. Using concrete as a packing material, the gas passages through the packing material can be made big enough to allow large ice depositions. Concrete is furthermore relatively cheap. As compared to aluminium, which is commonly used for the plates separating the streams in recuperative heat exchangers, concrete will be less negatively affected by heavy metals, such as mercury, likely to be present in flue gases.

The objects of the present invention are also achieved, in a third aspect, by use of a regenerative heat exchanger for cooling of a gas stream to a temperature below about 0 °C.

The gas stream may be moist. The ice formed when a moist gas stream is cooled to a temperature below 0 °C can better be accommodated in a regenerative heat exchanger, and can at least partly be removed during its regeneration, than in a recuperative heat exchanger typically having very thin channels that may be blocked by the ice formed.

The gas stream may be a CO₂ comprising flue gas stream, preferably a flue gas stream comprising about 3 to 90 vol% CO₂.

The regenerative heat exchanger may have a packing material comprising concrete. It has been found that concrete as a packing material may withstand the constant thermal cycling, the water deposition and the mechanical load without extended degradation over the lifetime of the regenerative heat exchanger. Using concrete as a packing material, the gas passages through the packing material can be made big enough to allow large ice depositions. Concrete is furthermore relatively cheap. As compared to aluminium, which is commonly used for the plates separating the streams in recuperative heat exchangers, concrete will be less negatively affected by heavy metals, such as mercury, likely to be present in flue gases.

### Brief description of the drawings

Figure 1 is a schematic view of a system for removal of CO₂ from a flue gas.
Figure 2 shows the result of a simulation of the loss in thermal efficiency caused by ice formation in a regenerative heat exchanger.

### Detailed description

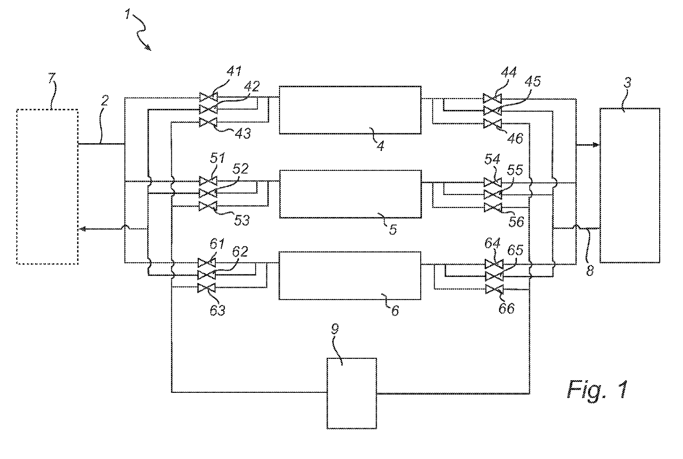

An embodiment of a system for removal of CO₂ from a flue gas will be described with reference to Figure 1. A system 1 for removal of CO₂ from a flue gas 2 comprises a CO₂ frosting vessel 3 and three regenerative heat exchangers 4, 5, 6. The regenerative heat exchangers 4, 5, 6 have a concrete packing. Each regenerative heat exchanger 4, 5, 6 is switchable between a first operation mode in which the respective regenerative heat exchanger is arranged to receive a CO₂ comprising flue gas 2 from a flue gas treatment system 7 and is further connected to an inlet of the CO₂ frosting vessel 3, a second operation mode in which the respective regenerative heat exchanger is connected to an outlet of the CO₂ frosting vessel 3 and is further arranged to provide a CO₂ reduced flue gas 8 to a flue gas treatment system 7, and a third operation mode in which the respective regenerative heat exchanger is disconnected from the CO₂ frosting vessel 3 and from the flue gas treatment system 7 but connected to a defrosting system 9. Thus, each regenerative heat exchanger 4, 5, 6 has its own set of valves 41-46; 51-56; 61-66 for channeling CO₂ rich flue gas 2 and CO₂ lean flue gas 8 through a desirable regenerative heat exchanger and for connecting a desirable heat exchanger to the defrosting system 9.

In a long duration batch process, the regenerative heat exchangers 4 and 5 are switched between the first and second operation modes whereas the regenerative heat exchanger 6 is connected to the defrosting system 9 (valves 61, 62, 64, 65 closed; valves 63, 66 open).

The regenerative heat exchangers 4 and 5 are operated in a short duration batch process by first passing CO₂ rich flue gas 2 from the flue gas treatment system 7 through the regenerative heat exchanger 4 (valves 41, 44 open; valves 42, 43, 45, 46 closed) to the CO₂ frosting vessel 3 and, at the same time, passing CO₂ lean flue gas 8 from the CO₂ frosting vessel 3 through the regenerative heat exchanger 5 (valves 52, 55 open; valves 51, 53, 54, 56 closed) to the flue gas treatment system 7. Thus, the regenerative heat exchanger 4 is warmed up and the regenerative heat exchanger 5 is cooled down. Warming up of a regenerative heat exchanger means cooling down the flue gas whereas cooling down of a regenerative heat exchanger means warming up the flue gas. During passage of CO₂ rich flue gas 2 through the regenerative heat exchanger 4, the gas is thus cooled. Moisture present in the CO₂ rich flue gas 2 transfers to ice and the gas is thus dried. Ice present in the regenerative heat exchanger 5 sublimates partly to the CO₂ lean flue gas 8, reducing ice accumulation in the regenerative heat exchangers. When one of the regenerative heat exchangers 4 and 5, usually the one being warmed up, has reached its final temperature setting, the gas streams are switched so that CO₂ lean flue gas 8 from the CO₂ frosting vessel 3 is passed through the regenerative heat exchanger 4 (valves 42, 45 open; valves 41, 43, 44, 46 closed) to the flue gas treatment system 7 and, at the same time, CO₂ rich flue gas 2 from the flue gas treatment system 7 is passed through the regenerative heat exchanger 5 (valves 51, 54 open; valves 52, 53, 55, 56 closed) to the CO₂ frosting vessel 3. Thus, the regenerative heat exchanger 4 is cooled down and the regenerative heat exchanger 5 is warmed up.

In the long duration batch process, when one of the regenerative heat exchangers 4 and 5 has reached its limit as regards accumulation of ice, this heat exchanger is connected to the defrosting system 9, whereas the regenerative heat exchanger 6 is disconnected from the defrosting system 9 and involved in the short duration batch process. During defrosting, warm, dry air or nitrogen is blown through the regenerative heat exchanger in order to sublimate and melt ice present in the heat exchanger. The liquid water formed is drained from the heat exchanger and the gaseous water formed leaves the regenerative heat exchanger with the air or nitrogen stream.

During the short duration batch process, ice accumulates in the regenerative heat exchangers. The above-mentioned limit as regards accumulation of ice may be related to the pressure drop caused by ice accumulating in the cavities of the packing material of the regenerative heat exchanger and/or to a decrease of the heat transfer coefficient caused by ice forming on the surfaces of the packing material. An advantage of a regenerative heat exchanger with a packing material such as concrete is its ability to function even after large amounts of ice has been deposited on its internal surfaces, i.e. on the packing material. This solves the dehumidification problem commonly encountered in sub-zero flue gas cooling systems. The large size of the internal channels of the regenerative heat exchanger, as compared, e.g., to a rather compact plate-fin heat exchanger, allows reducing the pressure drop due to the growing ice layer.

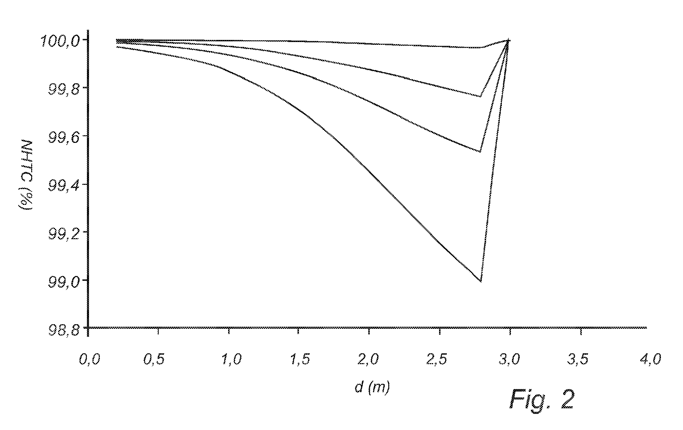

It is the insulating quality that stifles heat transfer, and therefore heat exchange, and makes the regenerative heat exchanger less efficient over time. When the ice layer has reached an unacceptably high resistance to heat transfer, the regenerative heat exchanger needs to be regenerated. The duty time necessary to build up such a layer is depending on the overall size of the regenerative heat exchanger, in relation to the properties of the gases being passed through, and can be measured in weeks or months rather than hours depending on the water concentration in the CO₂ rich flue gas. Figure 2 shows the results of a simulation of the loss in thermal efficiency caused by ice formation in a regenerative heat exchanger of a system corresponding to that of Figure 1. The curves in Figure 2 illustrate, from top to bottom, the reduction of a normalized heat transfer coefficient (NHTC) as a function of the distance (d) from the inlet of a regenerative heat exchanger after 1 day, 1 week, 2 weeks, and 1 month, respectively, of operation in the short term batch process.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of cooling and drying a moist first gas stream, the cooling being to a first temperature below about 0 °C, said method comprising the following steps:
a) passing a second gas stream, having a second temperature being lower than the first temperature, through a regenerative heat exchanger, whereby the temperature of the regenerative heat exchanger is decreased to a third temperature being lower than the first temperature; and
b) passing the first gas stream, having a fourth temperature being higher than the first temperature, through the regenerative heat exchanger, whereby the temperature of the first gas stream is decreased to the first temperature and a portion of the moisture present in the first gas stream is transferred to ice that is deposited in the regenerative heat exchanger.

2. The method according to claim 1, wherein the first gas stream is a CO₂ comprising flue gas stream, preferably a flue gas stream comprising about 3 to 90 vol% CO₂.

3. The method according to claim 2, further comprising the following step:
c) decreasing the temperature of the gas stream leaving the regenerative heat exchanger of step b) so that a phase change of CO₂ in the gas stream occurs, and separating such phase changed CO₂ from the gas stream.

4. The method according to any one of the preceding claims, further comprising the following step:
d) passing the gas stream resulting from step b) or step c), if present, to step
a) as the second gas stream.

5. The method according to any one of the preceding claims, wherein the regenerative heat exchanger has a packing material comprising concrete.

6. The method according to any one of the preceding claims, wherein the first temperature is in the range from about -10 to about -150 °C, the second temperature is in the range from about -10 to about -150 °C, and the fourth temperature is in the range from about 0 to about -60 °C;
preferably the first temperature is in the range from about -80 to about -110 °C, the second temperature is in the range from about -100 to about -140 °C, and the fourth temperature is in the range from about -35 to about -55 °C.

7. The method according to any one of claims 1 to 5, wherein the first temperature is in the range from about -10 to about -60 °C, the second temperature is in the range from about -10 to about -60 °C, and the fourth temperature is in the range from about +30 to about -60 °C.

8. A system for removal of CO₂ from a moist flue gas, the system comprising a CO₂ separation vessel adapted for operation at a temperature below about 0 °C, and
two or more regenerative heat exchangers,
wherein,
each regenerative heat exchanger is switchable between
a first operation mode in which the respective regenerative heat exchanger is arranged to receive a CO₂ comprising flue gas from a flue gas treatment system and is further connected to an inlet of the CO₂ separation vessel, and
a second operation mode in which the respective regenerative heat exchanger is connected to an outlet of the CO₂ separation vessel and is further arranged to provide a CO₂ reduced flue gas to a flue gas treatment system.

9. The system according to claim 8, which comprises three or more regenerative heat exchangers.

10. The system according to claim 9, wherein
each regenerative heat exchanger is switchable between the first operation mode,
the second operation mode, and
a third operation mode in which the respective regenerative heat exchanger is disconnected from the CO₂ separation vessel and from the flue gas treatment system, and preferably is connected to a defrosting system.

11. The system according to any one of claims 8 to 10, wherein the regenerative heat exchangers have a packing material comprising concrete.

12. Use of a regenerative heat exchanger for cooling of a gas stream to a temperature below about 0 °C.

13. Use according to claim 12, wherein the gas stream is moist.

14. Use according to claim 12 or 13, wherein the gas stream is a CO₂ comprising flue gas stream, preferably a flue gas stream comprising about 3 to 90 vol% CO₂.

15. Use according to any one of claims 12 to 14, wherein the regenerative heat exchanger has a packing material comprising concrete.
